Europäisches Patentamt

European Patent Office

Office européen des brevets

(19)

(11) Publication number: **0 383 551**
**A1**

(12) # EUROPEAN PATENT APPLICATION

(21) Application number: **90301529.5**

(22) Date of filing: **13.02.90**

(51) Int. Cl.⁵: **G11B 21/12, G11B 21/02, G11B 21/22**

(30) Priority: **14.02.89 JP 32598/89**

(43) Date of publication of application:
**22.08.90 Bulletin 90/34**

(84) Designated Contracting States:
**DE FR GB**

(71) Applicant: **International Business Machines Corporation**
**Old Orchard Road**
**Armonk, N.Y. 10504(US)**

(72) Inventor: **Kitahori, Hiroki c/o IBM Japan Ltd**
**FU-R52 3 Kirihara-cho, Fujisawa-shi**
**Kanagawa-ken 252(JP)**
Inventor: **Komatsuzaki, Toshiaki**
**4-35-21-709 Kitakarasuyama**
**Setagaya-ku, Toyko-to(JP)**
Inventor: **Masuda, Yoshimi**
**Moakuresuto 1-503, 2864-3 Nara-cho,**
**Midori-ku**
**Yokohama-shi, Kanagawa-ken(JP)**

(74) Representative: **Moss, Robert Douglas**
**IBM United Kingdom Limited Intellectual**
**Property Department Hursley Park**
**Winchester Hampshire SO21 2JN(GB)**

(54) **Disk drive with actuator returning and holding device.**

(57) A disk drive 10 contains one or more data storage disks 16, a head 30 for transferring data to and from the disk, and an actuator 32 for positioning the head over the disk. When no data transfer is occurring, the head is moved from the data recording region 22 of the disk surface to a parking region 26. This movement is assisted by the placement on the actuator of a magnetic body 90 which is attracted by flux leakage from the actuator motor magnets, and by a curved flexible member 82 which stretches from the disk drive body to the actuator.

FIG. 1A

Xerox Copy Centre

## DISK DRIVE WITH ACTUATOR RETURNING AND HOLDING DEVICE

### Field of the invention

The present invention relates to disk drives, and more particularly to an actuator that returns a head to a parking area at a specified region of a disk surface and retains it there whilst the head is not in use.

### Background of the Invention

To safeguard data recorded on a magnetic disk, it is common practice to move the data read/write head when not in use to a landing region, or parking area, located outside the data recording region on the disk. The actuator which supports and moves the head is then locked, so that the head remains outside the data recording region, even if an external impact or vibration occurs. This landing region is usually located at the innermost part of the disk, since it is harder to make the head float up at the inner part than at the outer part of the disk.

US 4647997 and US 4692829 disclose an actuator locking mechanism that is activated by airflow generated by the rotation of the disks. When the disks are not rotating, the actuator is held by a latch in a position such that the read/write head is in the landing zone. When the disks start spinning, the associated airflow presses on a vane, which releases the latch and so frees the heads for movement across the disks.

US 4647997 and US 4692829 also describe a method of returning a head to the landing region when the disks are powered down. The kinetic rotational energy present in the disks and spindle is converted into electrical energy by operating the disk drive spindle motor as a generator, and this provides a counter-electromotive force to rotate the actuator for positioning the head in the landing zone. It is sometimes difficult to get the head to reach the landing region with only the counter-electromotive force however, because the counter-electromotive force decreases rapidly as the rotation rate of the spindle motor declines. A supplementary force can be provided by the latch itself, trying to lock the actuator into position with the head over the landing zone as the airflow from the disks decreases.

Published Examined Patent Application JA 63-48110 discloses a locking mechanism for holding a carriage at a definite position by attracting a magnetic body mounted on the rear of the carriage using leakage fluxes which are produced in a magnetic circuit of the voice coil motor that drives the linear motion of the carriage. Since this locking mechanism retracts the carriage from the magnetic disk and then locks it, it is therefore impossible to reset the head to a landing region that is located inside the magnetic disk.

### Disclosure of the invention

Accordingly, the invention provides a disk drive including at least one rotatable data storage disk and an actuator mounted for rotation about a specified axis, the actuator supporting a head for movement over the disk for data transfer with the disk, and having a coil which cooperates with a magnetic circuit for rotating said actuator about the axis. The disk drive further includes an actuator returning and holding means whereby the head is moved to and retained in a parking region separate from the data recording region of the data storage disk when the head is not engaged in the data transfer. The disk drive is characterised in that: the actuator returning and holding means comprises a magnetic body attached to the actuator so as to tend to movement towards a region of strong leakage fluxes from the magnetic circuit, the movement thereby turning the actuator to position the head in the parking region.

The invention may be used whether the parking region is located on the inside or the outside of the disk. An advantage of the invention is that even if the parking region is located on the inside of the disk, the head carried by the actuator may be returned to the parking region, and retained there using only a small number of parts, without requiring power consumption.

Preferably, the coil is located at an end of the actuator diametrically opposed to the head relative to the actuator axis, with the region of strong leakage fluxes adjacent to this end on the disk side of the actuator: the magnetic body then lies approximately between the coil and the actuator axis. When the parking region is located on the inside of the disk, the magnetic body is on the disk side of the actuator, whereas when the parking region is located on the outside of the disk, the magnetic body is on the side of the actuator away from the disk.

The magnetic body might typically be made of iron, but cobalt, nickel or their alloys, etc., may also be employed. Any magnetic substance which is attracted by leakage fluxes is usable.

Preferably, the disk drive further includes a flexible member having one end fixed to the actuator and the other end fixed to the disk drive, so that the curvature of the flexible member will diminish as the actuator rotates about its axis moving the head from the data recording region to the parking region. It is further preferred that a flexible cable is utilised as the flexible member whose curvature decreases as the actuator is turned to move the head from the data recording region to the parking region of the disk, but if the use of such a cable is not possible, any flexible member which performs a function similar to this may be employed. The use of the flexible member allows for a biasing force on the actuator that is nearly constant over the radial range of movement of the head across the disk, thereby facilitating servo control of the actuator.

The advantages of the invention are not limited to magnetic disk drives, and are also applicable to other disks drives including those with optical or magneto-optical disks.

Brief Description of the Drawings

Fig. 1A is a plan view of a disk drive embodying the invention, shown with the transducer head positioned over the data recording region;

Fig. 1B is a plan view of a disk drive embodying the invention, shown with the transducer head positioned over the landing zone;

Fig. 2 illustrates the arrangement of and flux leakage from the magnets in the voice coil motor that drives the actuator of Figs. 1A and 1B;

Fig. 3 is a plan view of a coil spring in the latch of Figs. 1A and 1B;

Fig. 4A is a graph showing the change in the force with which the flexible cable turn the actuator, as the head carried by the actuator moves from the outside of the disk to the inside;

Fig. 4B is a graph showing the change in the force with which the magnetic body is attracted by the leakage fluxes from the voice coil motor magnets, as the head carried by the actuator moves from the outside of the disk to the inside;

Fig. 4C is a graph showing the sum of the forces shown respectively in Figs. 4A and 4B.

Detailed Description

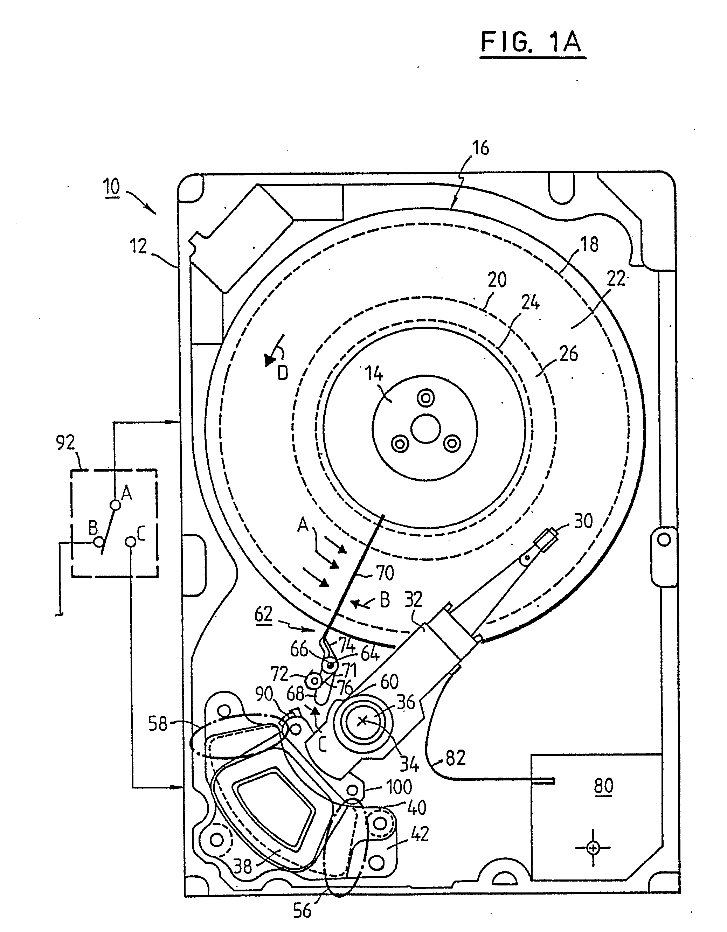

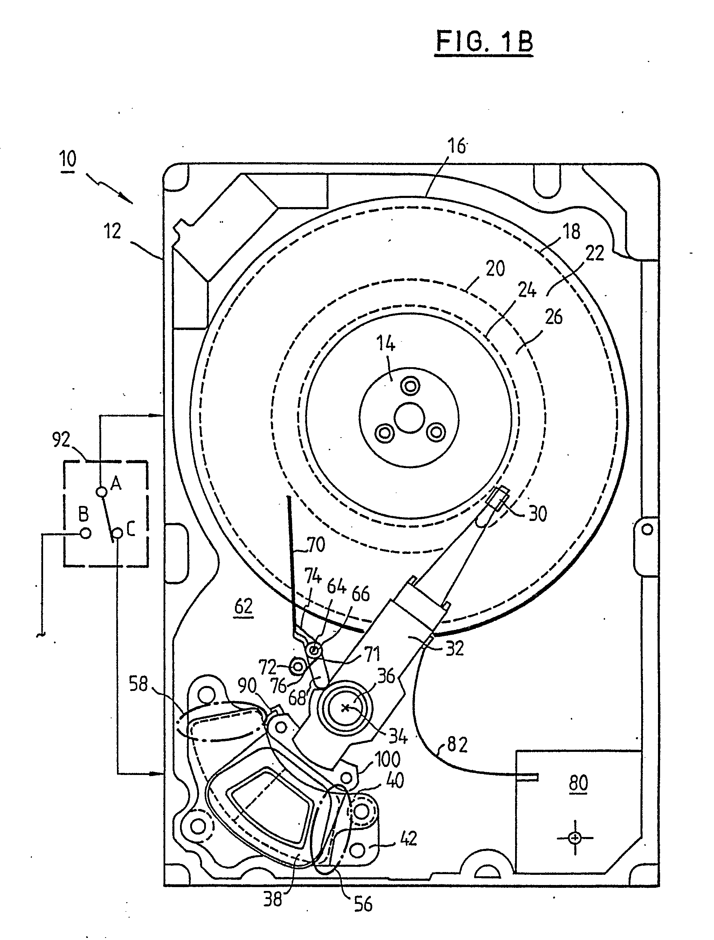

Figs. 1A and 1B show a magnetic disk drive with an actuator returning and holding device. The magnetic hard disk unit 10 includes a base 12. On the base 12, a spindle motor 14 is mounted (in Figs. 1A and 1B, only the spindle of the spindle motor is shown). A magnetic rigid disk 16 is driven by the spindle motor 14 (only one disk is shown but often several disks are stacked together). The disk 16 not only has a data recording region 22 between a concentric circle 18 and another concentric circle 20, but also has a landing region 26 between a concentric circle 20 and another concentric circle 24 inside the data recording region 22. A head 30 for reading data from or writing data onto the disk 16 is mounted on one end of an actuator 32. The actuator 32 is mounted on the base 12 through a shaft 36, to be rotatable about an axis 34. A coil 38 is fixed to the actuator 32 at the opposite end from the head, relative to axis 34.

Fig. 1A shows the magnetic head carried by the actuator located over the data recording region 22, whilst Fig. 1B shows the magnetic head located over the landing region 26.

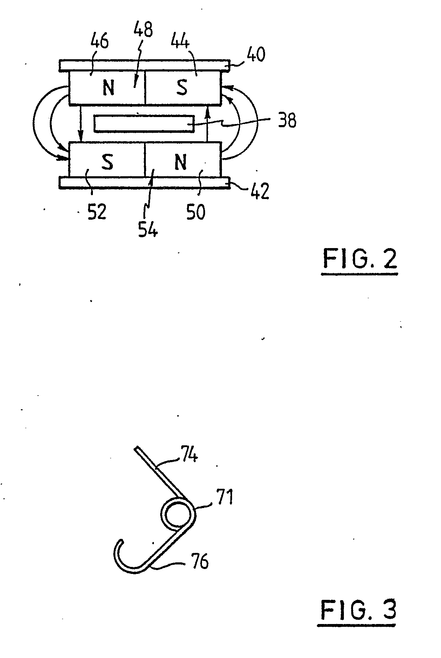

As shown in Fig. 2, the coil 38 is located between and at a specified distance from an upper yoke 40 and a lower yoke 42. Both the upper and lower yokes are fixed to the base 12. A permanent magnet 48 consisting of a South pole 44 and a North pole 46 is mounted on the side of the upper yoke 40 facing coil 38. On the side of the lower yoke 42 facing coil 38 is fixed a permanent magnet 54, comprising a North pole 50 opposing the South pole 44 and a South pole 52 opposing the North pole 46. Referring to Figs. 1A and 1B, the region encircled by a dot and dash line 56 and the region encircled by a dot and dash line 58 are regions exposed to heavy leakage fluxes from the permanent magnets 48 and 54. Of these two regions, the region utilised in this embodiment is that encircled by the dot and dash line 58. The region encircled by the dot and dash line 58 is near the end of actuator 32 opposite the head, lying in the neighbourhood of the position where coil 38 is mounted, roughly between the disk 16 and the actuator 32.

The coil 38 and the permanent magnets 48 and 54 cooperate to cause the actuator 32 to turn about axis 34. Thus the coil 38 and the permanent magnets 48 and 54 form a voice coil motor, producing a force (and thereby a rotational torque about axis 34) from the current flowing in the coil 38 and the magnetic field of the magnets 48 and 54, thereby moving the actuator 32. The direction in which the actuator 32 moves is determined by the direction of the current flowing in the coil 38, whilst the magnitude of the torque applied to the actuator 32 may be controlled by the amount of current flowing through the coil 38.

On the side of the actuator 32 facing disk 16 is a notch 60. Adjacent to the notch 60, there is a latch 62, which together with the notch 60, holds the actuator 32 so that the head is positioned over the landing region 26.

The latch 62 is mounted on the base 12 through a shaft 66 so as to be rotatable about axis 64. The latch 62 has a latch finger 68 on one side of the axis 64 and a vane 70 on the other side of the axis 64. The vane 70 receives wind blowing in the direction of arrows A which is produced by the rotation of the disk 16. A coil spring 71 (also shown in Figure 3) lies around the outer circumference of the shaft 66. A supporting post 72 for the spring is fixed on the base 12 near the shaft 66. The coil spring 71 has one end 74 joined to the vane 70 and the other end 76 joined to the post 72, in order to give the latch 62 a biasing force which acts to move the vane 70 in a direction B opposite to the direction A of the wind which is produced when the disk 16 turns in the direction of arrow D. When the wind in the direction of arrow A ceases due to the rotation of the disk 16 stopping, the latch finger 68 turns in the direction of arrow C due to the biasing force of the coil spring 71 and fits into the notch 60 in the actuator 32. In this position the head 30 is located over the landing region 26, and the latch holds the actuator 32 and head in place.

A flexible cable 82 is used to transfer data in the form of electric signals between the circuit board 80 on base 12 and head 30. One end of the flexible cable 82 is attached to circuit board 80, the other end is fixed to the actuator 32, such that its curvature will decrease as the actuator 32 turns about axis 34 to move the head 30 from the data recording region 22 to the landing region 26 of the disk 16. Accordingly, the force of the flexible cable 82 pushing the actuator 32 towards the landing region 26 gradually diminishes as the actuator 32 approaches the landing region 26.

A magnetic body 90, made of iron, is attached to the actuator 32. The magnetic body 90 is placed so that it will move to a region exposed to strong leakage fluxes from magnets 48 and 54 as the actuator 32 rotates moving the head 30 from the data recording region 22 to the landing region 26 of the disk 16. The magnetic body 90 is fixed in a position so that the arc drawn by the magnetic body 90, as the actuator 32 turns to move the head 30 toward the landing region 26, will intersect the region exposed to strong leakage fluxes which is encircled by the dot and dash line 58. Stated more specifically, the magnetic body 90 is fixed at a specified position on the actuator 32 between the axis 34 and the end opposite the head, and on the disk 16 side thereof.

When the magnetic hard disk unit 10 operates normally, the switch 92 connects the terminals A and B and consequently, the spindle motor 14 is powered to turn the disk 16. Vane 70 of the latch 62 then receives the wind blowing in the direction of arrow A which is produced by the rotation of the disk 16, causing the latch finger 68 to turn in the direction opposite to the direction of arrow C. The latch finger therefore comes off notch 60 in the actuator 32, so that the actuator 32 can move freely, as directed by the current flowing through the coil 38. The head 30 carried by the actuator 32 is lifted by an air bearing, resulting from the motion of the disk 16, so that it is suspended above the surface of the disk 16.

When the power supply is turned off, the switch 92 connects the terminals A and C, whereby the coil 38 mounted on the actuator 32 and the spindle motor 14 are interconnected. The spindle motor 14 turns for a while due to inertia, generating a counter-electromotive force. This counter-electromotive force causes a current to flow through the coil 38, thereby turning the actuator 32 to move head 30 towards the inside of the disk 16 from the data recording region 22 to the landing region 26. When the head 30 carried by the actuator 32 is placed near the outside of the disk 16, the force with which the flexible cable 82 pushes the actuator 32 toward the landing region 26 is large; this makes a significant contribution in turning the actuator 32 to move head 30 towards the landing region 26.

Since the spindle motor's counter-electromotive force rapidly diminishes as the disk stops spinning, the actuator 32 can not be held in the landing region 26 until the latch finger 68 is brought into contact with the actuator 32 by the counter-electromotive force alone. Holding the actuator 32 with the head over the landing region 26 using the biasing force of the flexible cable 82 is also problematic, because this biasing force will be smaller when the actuator 32 is at the inside of the disk 16 as opposed to the outside. Thus, there is a possibility that the head 30 carried by the actuator 32 cannot be moved to the landing region 126.

In general it is not practicable to solve this problem by increasing the biasing force of the flexible cable 82. If the flexible cable 82 is made thicker in order to have a biasing force large enough to hold the actuator 32 with the head at the inside of the disk 16, or similarly if the radius of the bow formed by the flexible cable 82 is made smaller, the force the actuator 32 receives at the outside of the disk 16 can become so large that it is difficult to control the actuator 32. Additionally, the flexible cable 82 may lose its biasing force through repetitive bending in the seeking operation; as a result, it is no longer able to hold the actuator 32 in place. As disk enclosures become smaller, the width of the flexible cable 82 cannot be made adequately large, and the flexible cable 82 is subject to repetitive stress in seek operations, as a result of which the biasing force is notably reduced. Furthermore, the biasing force of the flexible cable 182 is somewhat susceptible to change with varying temperature and moisture.

Therefore, as the head 30 approaches the inside of the disk 16, the counter-electromotive force generated by the spindle motor 14 attenuates and the force with which the flexible cable 82 pushes the actuator 32 toward the landing region 26 weakens. However, since the magnetic body 90 comes into the region exposed to heavy leakage fluxes encircled by the alternate long and short dash line 58, the force of the magnets 48 and 54 attracts the magnetic body 90 and causes the actuator 32 to proceed inwards over the disk 16. As the actuator 32 turns so as to bring the head 30 nearer to the landing region 26, the magnetic body 90 is moved to a region exposed to heavier leakage fluxes; as a result, the force of the magnets 48 and 54 to attract the magnetic substance 90 further increases. When the head 30 has reached the landing region 26, the force of the magnets 48 and 54 attracting the magnetic substance 90 due to the leakage fluxes therefrom becomes maximum, with a result that the actuator 32 tends to move further inward; then, the notch 60 in the actuator 32 is positively engaged by the latch finger 68, preventing the actuator from further movement.

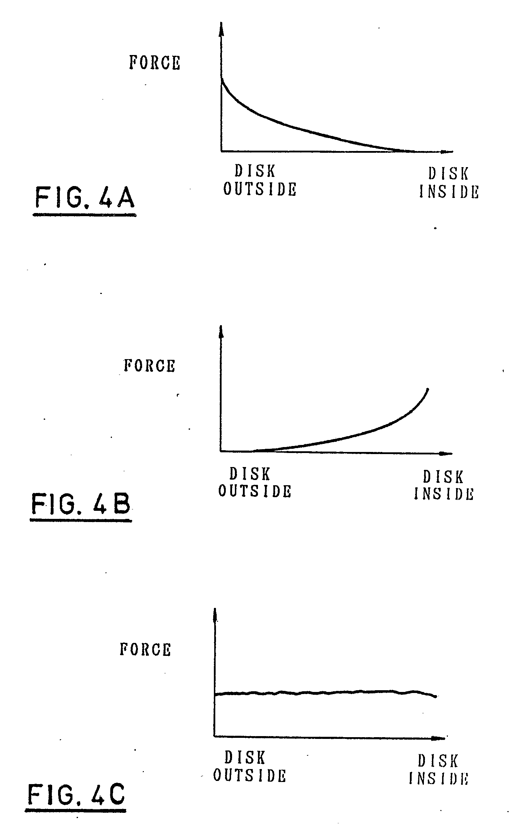

Fig. 4A shows the change in the force of the flexible cable 82 on the actuator 32, turning it inwards, as the head 30 moves from the outside to the inside of the disk 16. As shown by this graph, the torque provided by the flexible cable 82 decreases as the actuator 32 continues moving towards the inside of the disk 16, because of the diminishing curvature of the cable 82. Fig. 4B shows the change in the force with which the magnetic body 90 is attracted by the leakage fluxes from the magnets 48 and 54, as the head 30 moves from the outside to the inside of the disk 16. As shown by this graph, the force with which the magnetic body 90 is attracted grows larger as the head 30 approaches the inside of the disk 16. Fig. 4C shows the sum of the force provided by the flexible cable 82 and the attractive force the magnetic body 90 receives from the leakage fluxes, as the head 30 is carried from the outside to the inside of the disk 16. As indicated by this graph, the total biasing force the actuator 32 feels is nearly constant over the complete range of the data recording region 22, thus facilitating the control of the actuator by means of a servo.

## Claims

1. A disk drive (10) including at least one rotatable data storage disk (16) and an actuator (32) mounted for rotation about a specified axis (34), said actuator supporting a head (32) for movement over said disk, for data transfer with said disk and having a coil (38) which cooperates with a magnetic circuit (48) for rotating said actuator about said axis (34);
said disk drive further includes actuator returning and holding means whereby said head is moved to and retained in a parking region (26) separate from the data recording region (22) of said data storage disk, when said head is not engaged in said data transfer,
said disk drive being characterised in that:
said actuator returning and holding means comprises a magnetic body (90) attached to said actuator so as to tend to movement towards a region (58) of strong leakage fluxes from said magnetic circuit, said movement thereby turning said actuator to position said head in said parking region.

2. A disk drive as claimed in claim 1, wherein said parking region is located radially inwards of said data recording region.

3. A disk drive as claimed in any preceding claim, wherein said magnetic body is located such that the arc drawn by said magnetic body, as said actuator moves so as to turn said head to said parking region, intersects said region of said strong leakage fluxes.

4. A disk drive as claimed in claim 3, wherein said coil is located at an end of said actuator diametrically opposed to said head relative to said specified axis, and wherein said region of strong leakage fluxes is adjacent said actuator end, on the disk side of said actuator.

5. A disk drive as claimed in claim 4, wherein said magnetic body is located approximately between said specified axis and said coil on the disk side of said actuator.

6. A disk drive as claimed in any preceding claim, wherein said disk drive further includes a flexible member (82) having one end fixed to said actuator and the other end fixed to said disk drive, so that its curvature will diminish as said actuator rotates about said specified axis moving said head from said data recording region to said parking region.

7. A disk drive as claimed in claim 6, wherein the combined turning force on said actuator from said magnetic body and said flexible member is approximately independent of the radial position of said head over said disk.

8. A disk drive as claimed in claim 6 or claim 7, wherein said flexible member is used for the conveyance of electrical signals to and from said head.

9. A disk drive as claimed in any preceding claim, wherein said magnetic body is made of iron.

<u>FIG. 1A</u>

FIG. 1B

FIG. 2

FIG. 3

FORCE

DISK
OUTSIDE

DISK
INSIDE

FIG. 4A

FORCE

DISK
OUTSIDE

DISK
INSIDE

FIG. 4B

FORCE

DISK
OUTSIDE

DISK
INSIDE

FIG. 4C

| | DOCUMENTS CONSIDERED TO BE RELEVANT | | EP 90301529.5 |
|---|---|---|---|

| Category | Citation of document with indication, where appropriate, of relevant passages | Relevant to claim | CLASSIFICATION OF THE APPLICATION (Int Cl⁵) |
|---|---|---|---|
| Y | GB - A - 2 170 644 (PRIAM CORPORATION) * Fig. 1-3; abstract * -- | 1-3 | G 11 B 21/12 G 11 B 21/02 G 11 B 21/22 |
| D,Y | PATENT ABSTRACTS OF JAPAN, unexamined applications, P field, vol. 10, no. 284, September 26, 1986 THE PATENT OFFICE JAPANESE GOVERNMENT page 83 P 501 * Kokai-no. 61-104 375 (HITACHI LTD) ---- | 1-3 | |

| TECHNICAL FIELDS SEARCHED (Int Cl⁵) |
|---|
| G 11 B 21/00 |

The present search report has been drawn up for all claims

| Place of search | Date of completion of the search | Examiner |
|---|---|---|
| VIENNA | 04-05-1990 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82